# EUROPEAN PATENT APPLICATION

(11) **EP 1 204 274 A2**
(43) Date of publication of application: **08.05.2002**
(21) Application number: 01125904.1
(22) Date of filing: 30.10.2001
(51) Int. Cl.: H04N 5/44

(54) **Method and system for image display in a digital television transmitting and receiving system**

(30) Priority: 01.11.2000 JP 2000372122
(71) Applicant: Kabushiki Kaisha Asobou's, Tokyo (JP)
(72) Inventor: Katayama, Muneomi, Tokyo (JP)
(74) Representative: Kirschner, Klaus Dieter, Dipl.-Phys.

(57) **Abstract**

An image display system in a digital TV image transmitting and receiving system, comprising a buffer system which successively and temporarily records real-time broadcast video images and sounds linked to the broadcast video images while a real-time broadcasting is provided in a network, and an operating system for operating the buffer system whereby already broadcast video images and/or sounds are reproduced from the buffer system in parallel to the real-time broadcast images. A method for displaying digital TV images transmitted by a transmitting system and received by a receiving system, wherein real-time broadcast video images and sounds linked to the broadcast video images are successively and temporarily recorded, and wherein an already broadcast video image and/or sound are reproduced in parallel to the real-time broadcast images. Also a buffer system to be included into an image display system in a digital TV image transmitting and receiving system is provided.

## Description

The present invention relates to an image display system in a digital TV image transmitting and receiving system, a method for displaying digital TV images transmitted by a transmitting system and received by a receiving system and a buffer system to be used in connection with an image display system in a digital TV image transmitting and receiving system.

In a usual TV broadcasting, for example, sports broadcasting, video signals and sound signals are transmitted using microwaves from a broadcasting site to a TV station via a relay car, and further transmitted to viewers after necessary data are superimposed thereon in a master room at the TV station. Video images and data are constantly displayed on a screen regardless of whether the viewers like it or not. Generally, the viewers cannot choose the video images and data.

Another object of the present invention is to enable a viewer to see a presently broadcast image and an already broadcast image on the same TV display in real time.

This object is solved by the system of claim 1, the method of claim 6 and the buffer system of claim 11. Preferred embodiments of the invention are characterized in the subclaims.

By operating the buffer or backup system, the video image presently being broadcast and the already broadcast video image can be reproduced on two screens together with the sounds. In other words, a viewer can enjoy watching the video image broadcast in the past on the same display while watching a real-time broadcasting.

The preferred embodiment of the present invention provides a video image playback system and method in a novel digital TV image transmitting and receiving system for reproducing and transmitting a video image and/or a sound already broadcast on the same channel by separating the video image and a data linked therewith.

Specifically, particularly in a real-time broadcasting, scenes most wanted to see, for example, the form and facial expression of a player when the player hits a home run in a baseball game or the player shoots for a goal in a soccer game or the form and facial expression of a jockey when he wins by a nose, are often missed. In view of this situation, it is made possible to reproduce such exciting scenes themselves as video images or reproduce them on two or more split screens without overlapping the video image being broadcast in real time.

Also according to a preferred embodiment of the invention a transmitting system with built-in contents is provided using a database with built-in contents.

Embodiments of the invention are now described with reference to the drawings in which:
FIG. 1 is a block diagram showing a construction of the present invention, and
FIG. 2 is a block diagram showing a function of the present invention.

The present invention concerns a digital transmitting system for transmitting video images and data linked therewith on the same channel by separating them. This system at least transmits digitized video images and data linked therewith on the same channel by separating them and displays a desired video image and a data linked therewith upon a request from a receiver, and comprises a buffer system for temporarily storing digitized data (contents) of pieces of past information broadcast several seconds or several minutes before a video image presently being broadcast, a multiplexing/modulating device for transmitting a data signal via a ground wave or a satellite wave after multiplexing and modulating the video image and the data linked therewith, a demultiplexing/demodulating device for demultiplexing and demodulating the data signal transmitted on one usual TV channel via the ground wave or the satellite wave from the multiplexing/modulating device, and a receiver to which an output from the demultiplexing/demodulating device is inputted and which is connected with the buffer system.

### Embodiment 1

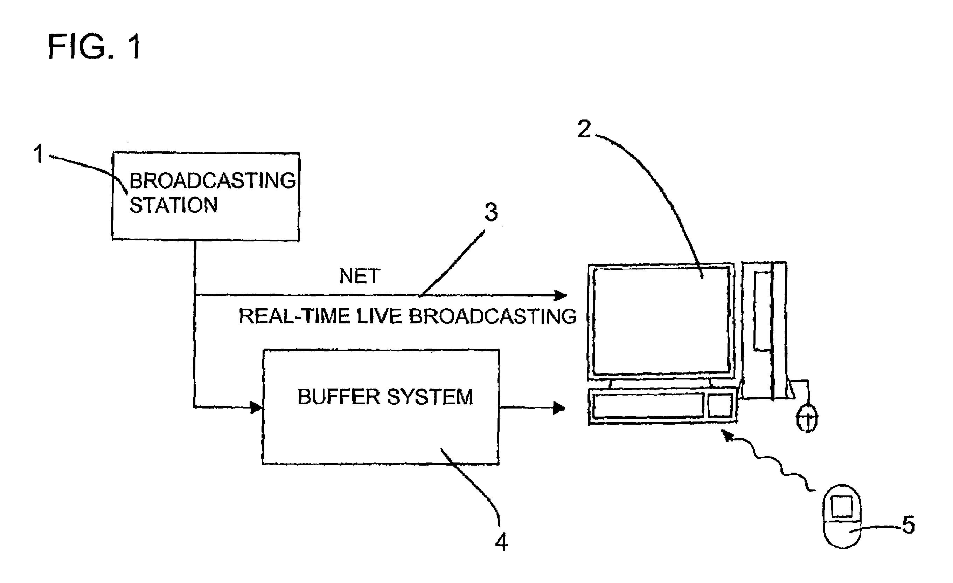

Hereinafter, embodiments of the invention are described. Identified by (1), (2) and (3) are a broadcasting station 1, a PC 2 of a viewer and a network system 3 of a real-time live broadcasting are shown in Fig. 1. A buffer system 4 is provided for storing video images and sound signals from the broadcasting station 3 for a predetermined time (by the second or by the minute). An operator of the PC 2 (viewer) can freely access to the stored information by means of a remote controller 5.

### Embodiment 2

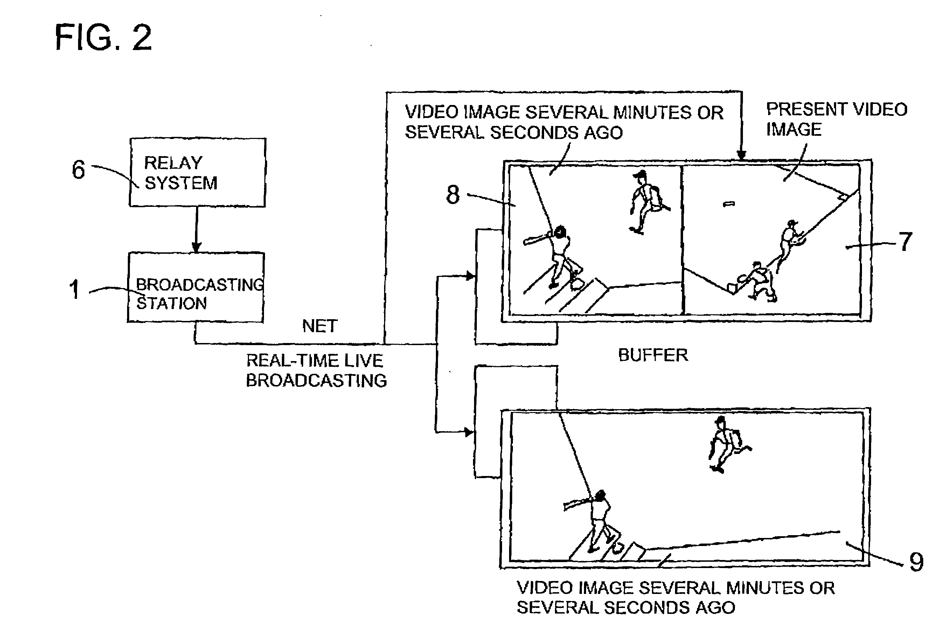

Now, reception of a baseball game broadcasting by the receiver, realized by the PC 2, is described for the sake of convenience. As shown in FIG. 2, video images and sounds collected by a relay system 6 are transmitted to the PC 2 of the viewer via the broadcasting station 1 as in a usual broadcasting.

If one player hits a home run while the viewer is absent for a short period of time, the viewer cannot watch the relating video images and sounds. This is because a video image presently being displayed is a video image several seconds or several minutes after that of the home run.

As a matter of course, the viewer wants to see this player's form and reaction and his fans' cheering encouragement when he hit a home rum.

Accordingly, the viewer calls and activates the buffer system 4. Since video images and sounds several seconds or several minutes before those presently being displayed, are recorded in the buffer system 4 as mentioned above, a video image 9 several seconds or several minutes ago can be displayed on the PC 2 of the viewer in a still or animated manner. Therefore, the player's form and reaction and so-called "clamor" from the audience when he hit a home run, which the viewer would have wanted to see, can be reproduced while the real-time broadcasting is being made.

If the video image several seconds or several minutes ago is displayed in parallel with the video image presently being broadcast on a display of the same PC 2 without being overlapped as shown by reference numerals 7 and 8 in FIG. 2, there is no possibility of missing a presently broadcast video image while viewing the past video image.

In the present invention, by providing the buffer system in the real-time live broadcasting, the digitized video image and sound presently being broadcast, and the video image and sound several seconds or several minutes before them can be simultaneously displayed. Therefore, the viewer can enjoy watching the video image and sound that were missed several seconds or several minutes ago simultaneously with a real-time broadcasting.

## Claims

1. An image display system in a digital TV image transmitting and receiving system, comprising a buffer system which successively and temporarily records real-time broadcast video images and sounds linked to the broadcast video images while a real-time broadcasting is provided in a network, and an operating system for operating the buffer system whereby already broadcast video images and/or sounds are reproduced from the buffer system in parallel to the real-time broadcast images.

2. The system of claim 1, wherein the real-time image presently being broadcast and an already broadcast video image and/or sound recorded in the buffer system are reproduced on two screens by operating the buffer system.

3. The system of claim 1 or 2, wherein the real-time image presently being broadcast and an already broadcast video image and/or sound recorded in the buffer system are reproduced on two split screen areas of a display by operating the buffer system.

4. The system of claim 1, 2 or 3, wherein the buffer system for successively and temporarily recording the broadcast video images and sounds linked to the broadcast video images for a period of minutes or seconds.

5. The system of any of the preceding claims, wherein the buffer system for successively and temporarily recording the broadcast video images and sounds linked to the broadcast video images successively records and erases the broadcast video images and sounds linked to the broadcast video images.

6. A method for displaying digital TV images transmitted by a transmitting system and received by a receiving system, wherein real-time broadcast video images and sounds linked to the broadcast video images are successively and temporarily recorded, and wherein an already broadcast video image and/or sound are reproduced in parallel to the real-time broadcast images.

7. The method of claim 6, wherein the real-time image presently being broadcast and a already broadcast recorded video image and/or sound in the buffer system are reproduced on two screens.

8. The method of claim 6 or 7, wherein the real-time image presently being broadcast and an already broadcast video image and/or sound recorded in the buffer system are reproduced on two split screen areas of a display.

9. The method of claim 6, 7 or 8, wherein the successively and temporarily recording of the broadcast video images and sounds linked to the broadcast video images is performed for a period of minutes or seconds.

10. The system of any of the preceding claims, wherein the successively and temporarily recorded broadcast video images and sounds linked to the broadcast video images are successively recorded and erased.

11. A buffer system to be included into an image display system in a digital TV image transmitting and receiving system, the buffer system being adapted to carry out the method of any of the claims 6 to 10.
